# EUROPEAN PATENT APPLICATION

(11) **EP 4 427 600 A1**
(43) Date of publication of application: **11.09.2024**
(21) Application number: 23305319.8
(22) Date of filing: 09.03.2023
(51) Int. Cl.: A23J 3/16, A23J 3/22, A23P 30/20

(54) **PROCESS FOR TEXTURING A PLANT-BASED PROTEIN COMPOSITION COMPRISING WET EXTRUSION, AN ACID AND/OR A BASE**

(71) Applicant: Les Nouveaux Fermiers, 75009 Paris (FR)
(72) Inventor: PALADRE, Thomas, Jean-Noël, 06800 CAGNES SUR MER (FR); LEBEAU, Maxime, 45000 ORLEANS (FR); ROMAGNE, Marion, Jacques, Marie-Andrée, 75010 PARIS (FR); LEGAY, Guillaume, Jonathan, Thomas, 91640 FONTENAY-LES-BRIIS (FR)
(74) Representative: Lavoix

(57) **Abstract**

The invention relates to a process for preparing a plant-based protein extrudate comprising the following steps:
(a) Preparing a plant-based protein mixture,
(b) Extruding the mixture of step (a), in order to obtain a plant-based protein extrudate, wherein extrusion of step (b) is a wet extrusion; and
wherein at least one acid and/or at least one base are added either to the mixture during step (a), or during extrusion of step (b), and wherein said at least one acid and/or at least one base produces gas during extrusion of step (b).

The invention also concerns a plant-based protein extrudate obtainable, or obtained, by this process and a food product comprising this plant-based protein extrudate.

## Description

The present invention concerns a process for texturing a plant-based protein composition comprising wet extrusion, an acid and/or a base, wherein the acid and/or base produces gas during wet extrusion.

Increasing concerns about well-being in ethical, social, health, and ecological aspects have resulted in an increase in the number of vegetarians. The replacement of meat protein with plant protein has therefore become an important research topic. However, plant-based meat analogues are generally different from actual meat in terms of mouthfeel, texture, taste, and flavour. These differences sometimes prevent the meat-replacements to be generally accepted.

The fibrous texture of the plant-based meat substitutes has been successfully obtained. For example, WO 2009/105654 describes the use of an extrusion die to form fibers from a granular protein composition. However, one organoleptic quality of meat hard to reproduce with plant-based replacements is juice retention. The juicy feeling and tenderness of meat texture can be obtained by creating cavities in the protein matrix. These cavities are able to contain a juice until consumer biting. For example, the patent WO 2012/158023 concerns a method for texturing cavities into vegetable protein matrix. It uses the vaporization of the water contained in the extrudate of fibrous soy proteins to create bubbles and then cavities. This step takes place after the extrudate leaves the die. Another example would be the patent WO 2021/032866 by injecting gas in the extrudate after the cooling die to create a "foam"-textured extrudate.

However, the vaporization of the water contained in the extrudate requires an additional step. The boiling effect is induced by the temperature of the environment at the exit of the die, called "first external environment". This necessitates an adaptation of the process and does not allow obtaining a homogeneity of the cavities inside the extrudate because of the temperature gradient.

The present invention meets this need.

### Summary of the invention

The invention relates to a process for preparing a plant-based protein extrudate comprising the following steps:
(a) Preparing a plant-based protein mixture,
(b) Extruding the mixture of step (a), in order to obtain a plant-based protein extrudate,

wherein extrusion of step (b) is a wet extrusion; and
wherein at least one acid and/or at least one base are added either to the mixture during step (a), or during extrusion of step (b), and wherein said at least one acid and/or at least one base produces gas during extrusion of step (b).

The invention also concerns a plant-based protein extrudate obtainable, or obtained, by this process and a food product comprising this plant-based protein extrudate.

### Detailed description of the invention

The present invention relates to a process of wet extrusion of a plant-based protein mixture and at least one acid and at least one base.

It also relates to the food product obtained or potentially obtainable by this process.

### Plant-based protein mixture

By "plant-based protein mixture", it is meant a mixture comprising at least water and at least one plant protein. In some embodiments, the plant protein mixture comprises more than one plant protein.

The mixture must be capable of undergoing wet extrusion. The skilled person will be able to determine if the mixture is capable of undergoing wet extrusion without excessive experimentation by simply testing the wet extrusion on a few test mixtures.

The mixture can include other compounds such as other plant-based materials, flavoring agent(s), coloring agent(s), preserving agent(s) and/or texturing agent(s), spices and/or herbs. Fat(s) can be added for the final product to get close to meat organoleptic characteristics.

In some embodiments, the plant-based protein mixture of step (a) comprises from 15% to 35% of dehydrated plant protein(s) by weight of the total weight of the mixture, and from 50% to 70% of water by weight of the total weight of the mixture.

The water can be pure water, tap water, bottled water, deionized water, spring water. Thus, the water may comprise salts or minerals or both.

The plant protein of the plant-based protein mixture preferably originates from a plant selected from the group consisting of leguminous plants, mushrooms, algae, and microalgae, used alone or in mixture.

By "leguminous plants" it is meant all plants belonging to the Fabaceae family, also called "legumes", such as, for example, peas, soybeans, beans, lentils, alfalfa, clover or lupins.

By "mushrooms" it is meant organisms gastronomically called "fungi" or "mushrooms".

By "algae", it is meant photosynthetic eukaryotic organisms, usually aquatic. "Microalgae" denotes microscopic, undifferentiated unicellular or pluricellular, eukaryotic or prokaryotic algae.

Preferably, protein sources devoid of gluten are used.

The at least one plant protein included in the plant-based protein mixture of step (a) may be an isolated or purified plant protein, or may be included in an isolated plant material enriched in protein(s), e.g. a plant protein isolate or plant protein concentrate. Accordingly, in some embodiments, the plant-based protein mixture of step (a) comprises at least one plant protein isolate, or at least one plant protein concentrate.

In some embodiments, the plant-based protein mixture of step (a) comprises at least one protein from a leguminous plant, preferably at least one soy protein. According to one embodiment, the at least one plant protein is entirely derived from soybean.

The at least one plant protein is used in any form available on the market (powder, liquid, unprocessed, raw, pureed, hydrated, cooked hydrated, pre-cooked, cooked dried, flour...)

According to an embodiment, the at least one plant protein can be provided partially in one form, and the rest in another form.

A protein isolate generally contains at least 80% protein(s) based on the total weight of the isolate (dry matter); it is usually obtained by a water extraction process. A protein concentrate typically contains 50-60% protein(s), by weight based on the total weight of the concentrate; it is typically obtained by an air separation process.

According to an embodiment, the plant protein is constituted of soybean protein isolate powder, or soybean protein concentrate.

### Acid and/or base

In the process of the invention, at least one acid and/or at least one base are added either to the plant-based protein mixture during step (a), or during extrusion of step (b), and said at least one acid and/or at least one base produces gas during extrusion of step (b). According to an embodiment at least one acid and/or at least one base are added either to the plant-based protein mixture during step (a), or during extrusion of step (b). According to another embodiment, at least one base is added either to the plant-based protein mixture during step (a), or during extrusion of step (b).

By "at least one acid and/or at least one base produces gas during extrusion of step (b)", it is meant a combination of at least one acid and at least one base that allows the formation or release of gas during extrusion upon acid-base reaction, or at least one acid or one base (in particular at least one base) that releases gas during extrusion, upon prolonged exposure to heat and humidity. The presence of gas is intended to make the dough rise and to create cavities, i.e. an open structure, which can be used to absorb water.

The at least one acid can be selected from the group consisting of potassium acid tartrate, monocalcium phosphate, sodium acid pyrophosphate, phosphorus pentoxide, citric acid, sodium aluminum phosphate, dicalcium phosphate dihydrate, sodium aluminum sulfate, glucono delta-lactone, fumaric acid, and dimagnesium phosphate.

The at least one base can be selected from the group consisting of sodium bicarbonate, ammonium bicarbonate, and potassium bicarbonate.

When the process comprise addition of at least one acid and at least one base, the at least one acid and the at least one base can be introduced separately or be present in a leavening agent.

The at least one acid, and/or the at least one base, possibly in the form of a leavening agent, can be introduced directly during the preparation of the mixture (step a) or during the extrusion (step b). The skilled person will be able to find the proper proportions and timing without excessive experimentation by simply inspecting a few test extrudates, keeping in mind the objectives of juicy feeling and tenderness of meat texture.

According to some embodiments, the leavening agent is added (during step a or step b) in a sufficient amount to allow enough gas liberation or gas formation for the formation of cavities, preferably from 0.1% and 5% by weight of the total weight of the plant-based protein mixture.

### Mixture preparation

The ingredients of the plant-based protein mixture can be mixed together during the mixture step (step a) and/or during the extrusion (step b). If the mixing takes place during the extrusion (step b), step (a) may consist only in adding the ingredients together.

If the at least one plant protein is introduced in the mixture as a dry matter, the plant-based protein mixture preparation can comprise a preliminary hydration step. By "hydrating" the plant proteins is meant herein making said plant proteins absorb water. Said contacting may be implemented by immersing said plant proteins in water. As will be understood by the skilled person, the period of time during which said hydration is performed needs to be sufficient to enable said plant textured proteins to absorb the water.

### Extrusion of the plant-based mixture

In accordance with the invention, the extrusion of step (b) is a wet extrusion implemented after the step (a) of plant-based protein mixture preparation and comprises the following steps:
i. subjecting the mixture of step (a) to one or more kneading steps so as to form a dough;
ii. heating the dough of the step (i) to a temperature above the temperature of protein denaturation; and
iii. subjecting the dough of the step (ii) to adequate shear and pressure forces in an extruder, so as to form a fibrous composition.

If not yet included in the plant-based protein mixture, at least one acid and/or at least one base, for instance in the form of a leavening agent, can be added during this step of extrusion, preferably during step i, to allow a homogenous presence of the acid and/or base in the dough and a homogenous presence of cavities in the extrudate.

An extruder typically includes a plurality of temperature-controlled zones or sections through which the mixture is conveyed under mechanical pressure before exiting the extrusion apparatus through a set of extrusion dies.

The process can be performed by supplying the mixture of step (a) to a first section of an extruder. The mixture may also be prepared in a separate premixing area, after which it is supplied to the extruder. Alternatively, the mixture may be in the form of a pre-mixed paste that is pumped into the extruder. Additional water may also be added in one or more subsequent sections of the extruder.

The skilled person can use any suitable extrusion apparatus known in the art. These include, e.g., a double barrel, twin-screw extruder. It is preferred to use an extruder having a ratio of length/diameter (L/D) greater than 20, preferably having an LID greater than 40. The upper limit is essentially determined by practical or mechanical considerations. The LID can conveniently be about 10-15 lower (preferably still above 30), if the mixing is done prior to entry into the extruder.

The extruder can be single screw but is preferably of the twin-screw type. The screws of a twin-screw extruder can rotate within the barrel in the same or opposite directions. Rotation of the screws in the same direction is referred to as single flow whereas rotation of the screws in opposite directions is referred to as double flow. The speed of the screw or screws of the extruder may vary depending on the particular apparatus; however, it is typically from about 50 to about 1500 rpm. The extrusion apparatus contains screws assembled from shafts and worm segments, as well as mixing lobe and ring-type shear lock elements as recommended by the extrusion apparatus manufacturer for extruding plant protein product.

A section of an extruder can either be visibly distinguishable as a sub-part of an extruder, or it can be functionally be a sub-part (e.g. zones allowing different heating or cooling regimes can define different sections).

In one or more subsequent sections, the kneading (step i), heating (step ii) and shearing (step iii) treatments are performed. In general, kneading (step i) and heating (step ii) take place simultaneously, although it is conceivable to start kneading before heating, or to start kneading only after the denaturation of the proteins performed by step (ii).

The kneading step (i) produces a dough that is subjected to shear forces and pressure. These forces are exerted in one or more sections and serve to provide a microfiber structure. The absolute pressures and shear forces used will differ depending on the type of extruder. The skilled person will be able to adjust these values without excessive experimentation by simply inspecting a few test extrudates.

The heating step (ii) is performed preferably at a denaturation temperature between 120°C and 170°C and a pressure between 10 and 50 bar.

In a final section, in the cooling dye through which the extrudate exits the extruder, the pressure and temperature are lowered compared to the previous sections, outside of the boiling conditions. The temperature is preferably between 50°C and 99°C.

### Cutting and hydration

In accordance with the invention, the plant-based protein extrudate produced by the wet extrusion of step (b) can further undergo a step of cutting (step (c)) and of hydrating the cut extrudate (step (d)). Since the plant-based protein extrudate is generally obtained as a continuous extrudate at the exit of the extruder, it can be cut to any desired size. This shape can be further processed by cutting, grinding or other techniques to produce the desired shapes and sizes. Preferably, a shape close to that of a meat product will be sought.

The hydration of step (d) of the plant-based protein extrudate after cutting is performed by soaking into an aqueous composition, preferably a brine or a marinade, at temperature below 99°C. Preferably, the hydration is cold, at a temperature between 1°C and 30°C.

The aqueous liquid may be water. However, the aqueous liquid may be used to provide flavoring to the composition. For this purpose, the aqueous liquid is preferably a broth, a brine or a marinade. Depending on the intended end use, stronger or milder flavors may be added.

In connection with the above, in another embodiment, the invention also presents a process for preparing a meat analogue, wherein a structured extrudate of vegetable proteins is made by a process as described above, and wherein the extrudate is subjected to infusion by an aqueous liquid, and more preferably a broth. It can include other compounds such as flavoring agent(s), coloring agent(s), preserving agent(s), spices and/or herbs. Fat-rich material(s) as such as oil can be added for the final product to get close to meat organoleptic characteristics.

It can be noted that the hydration capacity of the extrudate can be used experimentally to determine the tenderness of the extrudate following its exposure to microwaves. In this way, both the fibrousness and tenderness of the product can be controlled, allowing the process of the invention to be used to manufacture a range of meat-like products based on vegetable proteins. The presence and thickness of the skin-like texture might also be controlled.

### Optional additional steps

After the described steps, the method of the invention may comprise additional steps of treatment such as freezing and/or packaging under modified atmosphere.

By "modified atmosphere" is meant herein the practice of modifying the composition of the internal atmosphere of a package in order to improve the shelf life, in particular by reducing the level of oxygen and replacing it with other gases.

### Plant-based protein extrudate and food product

The invention concerns also a plant-based protein extrudate obtainable, or obtained, by the process described above and a food product comprising said plant-based protein extrudate.

It is highly conceivable that the food product resulting from the process of the invention would be capable of giving the consumer a mouthfeel close to meat, without necessarily copying the actual fibrous structure of meat. It is also possible to give textures that do not resemble meat at all but allow for customer satisfaction nonetheless.

The invention will be illustrated with reference to the following, non-limiting example(s).

### Figures

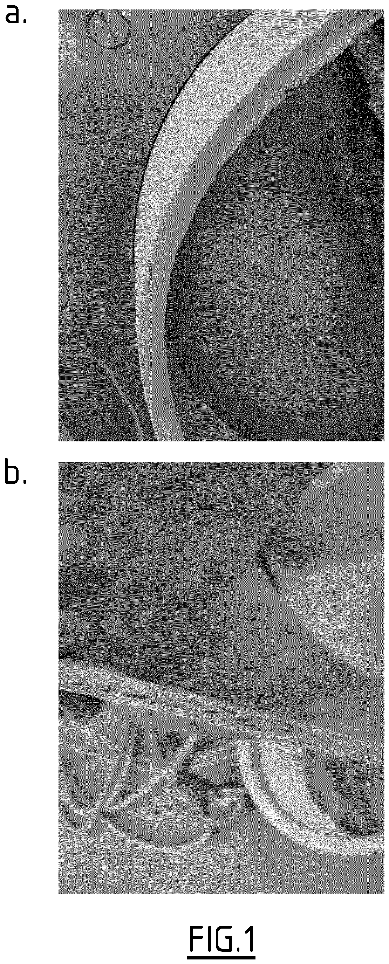

Fig. 1: Visual aspect of extrudate texture from dough without (a) or with (b) acid and/or base (sodium bicarbonate and phosphoric acid mix) at the exit of the cooling die.
Fig. 2: Visual aspect of D1105 (a)(with sodium bicarbonate and phosphoric acid mix) and D1102 (b)(without sodium bicarbonate and phosphoric acid mix).
Fig. 3: Appreciation of the texture of D1105 (with sodium bicarbonate and phosphoric acid mix) and D1102 (without sodium bicarbonate and phosphoric acid mix) by expert panel.

### Examples

### Example 1: Quantification of gas release

Several mixtures of reagents to generate off-gassing are evaluated:
*1*. Sodium bicarbonate and Phosphoric acid

   *6NaHCO₃* + *P₂O₅* → *2Na₃PO₄* + *3H₂O* + *6CO₂*
*2*. Sodium bicarbonate and Citric acid

   *3NaHCO₃* + *H₃C₆H₅O₇* → *Na₃C₆H₅O₇* + *3H₂O* + *3CO₂*
3. Sodium bicarbonate and Tartric acid

   *2NaHCO₃* + *2KC₄H₅O₆* → *2H₂O* + *2CO₂* + *K₂C₄H₄O₆* + *Na₂C₄H₄O*
4. Sodium bicarbonate

   *2NaHCO₃* → *Na₂CO₃* + *H₂O* + *CO₂*
*5*. Ammonium bicarbonate

   *NH₄HCO₃* → *CO₂ + H₂O + NH₃*

The mass of gas generated is calculated by mass balance.

### Results:

**Table 1: Calculation of the ratio between mass of gas released and the reagent mass**

| | **Reagent molar mass (g/mol)** | **Gases released** | **Gases molar mass (g/mol)** | **Gases released mass (g) for 1 mole of reagent** | **Ratio mass of gas generated/ reagent mass** |
|---|---|---|---|---|---|
| **Sodium bicarbonate and Phosphoric acid** | 645.98 | H₂O | 18.01528 | 54.04584 | 7% |
| | | CO₂ | 44.01 | 264.06 | 34% |
| | **total** | | | | **40%** |
| **Sodium bicarbonate and Citric acid** | 444.14 | H₂O | 18.01528 | 54.04584 | 12% |
| | | CO₂ | 44.01 | 132.03 | 30% |
| | **total** | | | | **42%** |
| **Sodium bicarbonate and Tartric acid** | 544.37 | H₂O | 18.01528 | 36.03056 | 7% |
| | | CO₂ | 44.01 | 88.02 | 16% |
| | **total** | | | | **23%** |
| **Sodium bicarbonate** | 168.01 | H₂O | 18.01528 | 18.01528 | 11% |
| | | CO₂ | 44.01 | 44.01 | 26% |
| | **total** | | | | **37%** |
| **Ammonium bicarbonate** | 79.06 | H₂O | 18.01528 | 18.01528 | 23% |
| | | CO₂ | 44.01 | 44.01 | 56% |
| | | NH₃ | 17.0305 | 17.0305 | 22% |
| | **total** | | | | **100%** |

### Conclusion

Thanks to the stoichiometric calculation, the expansion level can be adjusted and so formulation can be changed as needed.

### Example 2: Water absorption capacity of cavitated matrices

### Plant-based protein mixture :

A plant-based protein mixture is prepared comprising 59% water; 38% soy; 2% oil; 1% sodium bicarbonate and phosphoric acid mix. The dry ingredients soy, acid and base are mixed together and then transferred in the hopper of the dosing system. The dosing system is a gravimetric system that metered the blend through the feed inlet of a twin screw extruder (co-rotating twin-screw extruder Bühler - BCTG62) at a rate of 85.1 kg/h. At the same time, the water is dosed via volumetric pump at 80-95°C at the rate of 142.5 kg/h.

### Extruder parameters:

- Screw profile assembly:
   - Zone 1-3: conveying screws;
   - Zone 4-5: mixing elements screws;
   - Zone 7-8: medium shear screws;
   - Zone 9: final conveying screws
- Extruder barrel: 9 zones, with 8 zones thermally controlled through tempering units via pressurized water. Overall length: 2232mm
- Temperature setup:
   - Zone 2-3: 70-85°C ;
   - Zone 4-5-6: 160-185°C ;
   - Zone 7-8-9: 150-180°C
- Barrel pressure: 10 - 15 Bar
- Product temperature: 140 - 150°C
- Cooling die temperature: 80-95°C all zones
- Outlet product temperature: 80 - 95°C

Measurements of mass setting after aqueous treatment are performed to measure the impact of the cavities obtained with the baking powder on the water absorption capacity. For this purpose, a defined amount of material is immersed in cold water between 5 and 20°C for 2 minutes. The hydration rate is calculated between the weight of water absorbed and the weight of the pre-soaked matrix.

### Results

**Table 2: hydration rate in presence or absence of leavening agent.**

| Sample | Leavening agent (sodium bicarbonate and phosphoric acid mix) | Hydration rate | Mean | Sd |
|---|---|---|---|---|
| D1220 | Yes | 21.36 | 20.5 | 1.3 |
| D1105 | Yes | 19.58 | | |
| D1102 | No | 16.88 | 15.4 | 2.1 |
| D1102bis | No | 13.91 | | |

### Conclusion

Thus, the acid and/or base addition creates cavities that improve the hydration of the matrix of the extrudate.

### Example 3: Texture assessment

To characterize and measure the impact of the acid and/or base addition on the texture of the material, a texture assessment methodology was developed and is applied, with the texturometer Shimadzu EZ-Test SX. A cell of 100N, a blunt blade probe and a tray support were used.

Samples should be tempered to 15-20°C before testing. If the samples are frozen, they must be thawed in a refrigerator at 5°C at least 24 hours before testing. Furthermore, a special attention is paid to not letting the material dry out during the measurements. For this purpose, the samples must be covered between the measurements. 10 samples are required to average the values and remove possible outliers. Samples are of similar size, shape and weight to reduce bias in the analysis.

The sample is placed on the tray so that the cutting tool is perpendicular to the direction of sample extrusion.

Steps of the texture testing method program:
1. descent until sample contact then height is tared (height 0)
2. descent at 1 mm/min to 7 mm
3. rise at 1 mm/min to height 0.
4. descent at 1 mm/min to 7 mm
5. rise at 1 mm/min to height 0.

### Results:

**Table 3: Texture profile of extrudates with or without baking powder**

| | **D1102 (without acid and/or base)** | | **D1105 (with sodium bicarbonate and phosphoric acid mix)** | | **Evolution (%)** |
|---|---|---|---|---|---|
| | Mean | sd | Mean | sd | Mean |
| **Young modulus (N/mm²)** | 2.926 | 0.814 | 1.990 | 0.373 | **-32.0%** |
| **Hardness (N)** | 47.959 | 9.914 | 32.275 | 7.664 | **-32.7%** |
| **Cohesiveness** | 0.380 | 0.092 | 0.352 | 0.089 | **-7.5%** |
| **Springiness** | 1.060 | 0.114 | 1.088 | 0.216 | **2.6%** |
| **Gumminess** | 18.748 | 8.659 | 11.614 | 4.932 | **-38.0%** |
| **Chewiness** | 19.832 | 9.567 | 12.005 | 3.733 | **-39.5%** |
| **Resilience** | 0.356 | 0.232 | 0.343 | 0.202 | **-3.6%** |

According to the texture measurements, the addition of a baking powder imparts:
- A 32% loss in hardness, which translates into less effort under the tooth when chewing the product with baking powder,
- A 32.7% loss in Young's modulus, which corresponds to a reduced feeling of firmness with the product with the baking powder;
- A drop of the Gumminess by 38%, which means that the product has a less gummy and less elastic texture with baking powder. The Chewiness naturally follows this trend as it depends on this value (Chewiness = Gumminess × Springiness).
- A moderate decrease in Cohesiveness of 7.5%, which is manifested by a decrease in elasticity.

There are significant differences in texture between a matrix with and without baking powder.

### Example 4: Sensory analysis of soy strips

This sensory test allows knowing the organoleptic impact of the baking powder. The test compares a reference soy strip product with (D1105) and without (D1102) acid and/or base. The organoleptic test is carried out blind on an expert panel of 8 tasters regularly trained in the tasting descriptors. It allows comparing the products on selected tasting descriptors specific to the soy strips. The 2 sample tracks are prepared according to the same processes as described in example 3. The products are cooked in a frying pan for 6 minutes over medium heat with a tablespoon of sunflower oil. The sensory experts are asked not to eat anything, to drink only water and not to smoke 1 hour before the sensory test.

### Definition of descriptors and rating scale:

- Overall visual assessment before consumption of the product (scale of 1 to 5):
   - Regular cuts: edges are straight and angular. Gives the impression of an industrial product.
   - Torn cuts: presence of asymmetries at the edges.
   - Compact: the product forms a block. There is little or no empty space.
   - Airy: the product has a light aspect, presence of sheets and cavities.
- Global appreciation of the aromatic of the product (scale from 0 to 10):
   - Green note: fresh and vegetal note of legumes (pea, chickpea, lentil, bean, soybean).
- Appreciation of the texture of the product (scale from 0 to 10):
   - Soft, melting: the product deforms easily, does not hold under the tooth.
   - Firm: the product resists to compression.
   - Compact in mouth: the texture is dense in mouth. It is very homogeneous.
   - Airy in the mouth: the texture is light, the fibers are quite distinct from each other.
   - Gummy: the texture is consistent and soft. It tears easily while having chewiness.
   - Elastic: the texture is rubbery in the mouth. There is a rebound effect under the tooth. the product needs to be chewed for a long time.
   - Greasy veil, coverage: the product leaves a greasy sensation on the palate and tongue after chewing.
   - Dry: the product does not release liquid when chewed, it dries the mouth.
   - Juicy: the product releases water or liquid as soon as the teeth are touched.

### Results:

**Table 4: Visual, aromatic and texture assessments**

| | | Average grade for: D1105 (with sodium bicarbonate and phosphoric acid mix) | Average grade for: D1102 (without acid and/or base) |
|---|---|---|---|
| Overall visual assessment | Regular cuts (0) to Torn cuts (5) | 3.7 | 2.3 |
| | Compact (0) to airy (5) | 3.8 | 1.8 |
| Aromatic of the product | Global (0 to 10) | 6.3 | 5.0 |
| | Green note (0 to 10) | 1.7 | 2.0 |

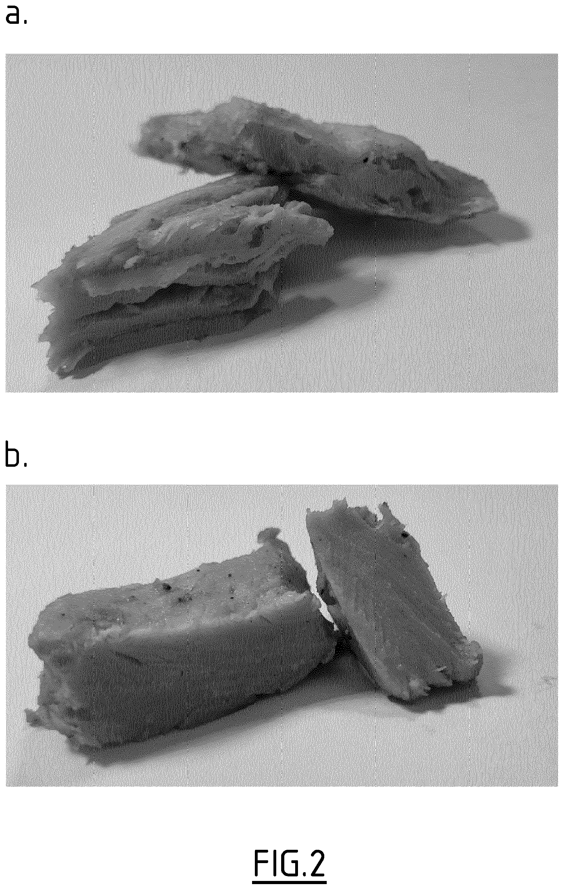

The baking powder has an impact on the visual aspect of the product before consumption, the sample D1105 has a more aerated and torn aspect compared to the sample D1102 (Figure 2 and Table 4).

The acid and/or base also allows to have a more intense aroma and to decrease the undesirable vegetal note of the sample D1105. It can be expected that the marinade penetrates more in the heart of the product and allows playing with these aspects.

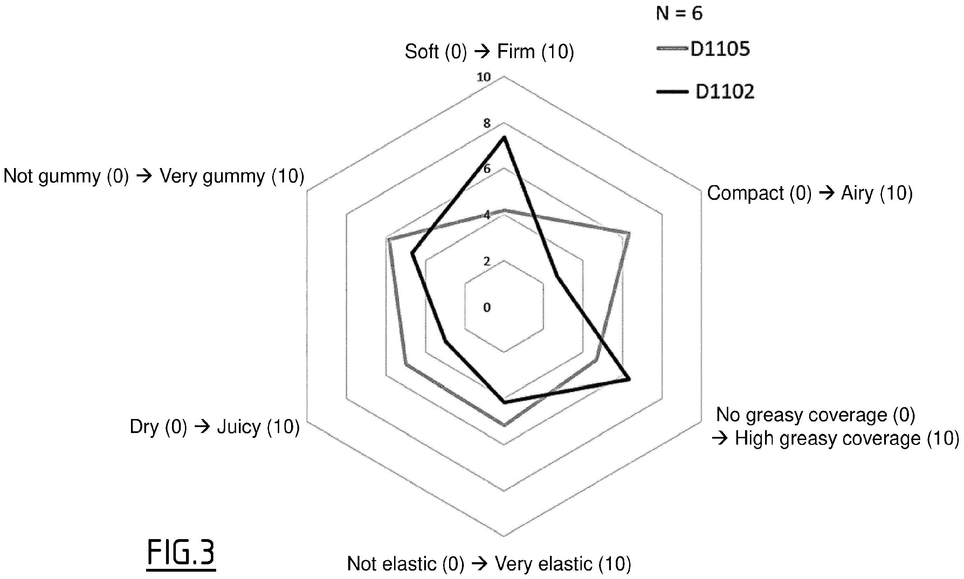

Furthermore, the acid and/or base addition improves the appreciation of the texture of the product (Figure 3.). It softens and aerates the product. It also decreases the gummy descriptors and makes the product more elastic. These results support the texturometer measurements. The product is considered juicier; it can be considered that the sheets allow a better penetration of the marinade in the heart of the product. The greasy coverage of the product is considered higher, for the same reason.

### Conclusion

The addition of an acid and/or a base in the preparation of the extrudate allows a gas release and creates cavities in the extrudate matrix. The cavities can have several shapes and improve the absorption of liquid (water, oil, marinade, etc.). It also modifies the texture of the extrudate. The modifications of the absorption of liquid and the texture are considered as improvement of the visual, aromatic and texture appreciations for the consumer.

## Claims

1. A process for preparing a plant-based protein extrudate comprising the following steps:
(a) Preparing a plant-based protein mixture,
(b) Extruding the mixture of step (a), in order to obtain a plant-based protein extrudate,
wherein extrusion of step (b) is a wet extrusion; and
wherein at least one acid and/or at least one base are added either to the plant-based protein mixture during step (a), or during extrusion of step (b), and wherein said at least one acid and/or at least one base produces gas during extrusion of step (b).

2. The process according to claim 1, wherein at least one acid and at least one base are added either to the plant-based protein mixture during step (a), or during extrusion of step (b), and said at least one acid and at least one base are selected to produce gas upon acid-base reaction.

3. The process according to claim 1, wherein at least one base is added either to the plant-based protein mixture during step (a), or during extrusion of step (b), and said at least one base releases gas during wet extrusion.

4. The process according to any one of claims 1 to 3, which further comprises:
(c) Cutting the plant-based protein extrudate of step (b) according to a given shape, and
(d) Hydrating the cut plant-based protein extrudate of step (c).

5. A process according to any one of claims 1 to 4, wherein the plant-based protein mixture of step (a) comprises at least one protein from a leguminous plant, preferably at least one soy protein.

6. The process according to any one of claims 1 to 5, wherein the plant-based protein mixture of step (a) comprises at least one plant protein isolate, or at least one plant protein concentrate.

7. The process according to any one of claims 1 to 6, wherein the plant-based protein mixture of step (a) comprises from 15% to 35% of dehydrated plant protein(s) by weight of the total weight of the mixture, and from 50% to 70% of water by weight of the total weight of the mixture.

8. The process according to any one of claims 1-2 and 4-7, wherein the acid is chosen from potassium acid tartrate, monocalcium phosphate, sodium acid pyrophosphate, sodium aluminum phosphate, dicalcium phosphate dihydrate, sodium aluminum sulfate, glucono delta-lactone, fumaric acid, or dimagnesium phosphate.

9. The process according to any one of claims 1 to 8, wherein the base is chosen from sodium bicarbonate, ammonium bicarbonate, or potassium bicarbonate.

10. The process according to any one of claims 1 to 8 wherein the acid and the base are present in a leavening agent.

11. The process according to claim 10, wherein the leavening agent is present in an amount of from 0.1% and 5% by weight of the total weight of the plant-based protein mixture.

12. The process of any one of claims 1 to 11, wherein the extrusion step (b) comprises the following steps:
i. subjecting the plant-based protein mixture of step (a) to one or more kneading steps so as to form a dough;
ii. heating the dough of step i to a temperature above the protein denaturation; and
iii. subjecting the dough of step ii to adequate shear and pressure in an extruder, so as to form a fibrous composition.

13. The process of any one of claims 1 to 12, wherein the extrusion of step (b) is performed at a temperature between 120°C and 170°C and a pressure between 10 and 50 bar.

14. The process of any one of claims 1 to 13, wherein the temperature of the extrudate in the cooling die, at the end of the extrusion of step (b), is outside of the boiling conditions, preferably between 50°C and 99°C.

15. The process of any one of claims 1 to 14, wherein the hydration of step (d) of the extrudate is performed at temperature below 99°C, preferably between 1°C and 30°C.

16. The process of any one of claims 1 to 15, wherein the hydration of step (d) of the extrudate is performed by soaking into an aqueous composition, preferably a brine or a marinade.

17. A plant-based protein extrudate obtainable, or obtained, by the process according to any one of claims 1 to 16.

18. A food product comprising the plant-based protein extrudate according to claim 17.
